# EUROPEAN PATENT APPLICATION

(11) **EP 4 464 848 A2**
(43) Date of publication of application: **20.11.2024**
(21) Application number: 24171851.9
(22) Date of filing: 23.04.2024
(51) Int. Cl.: E03B 1/04, E03B 7/04, E03B 7/07, E03B 7/08, E03C 1/044, E03C 1/046, E03C 1/05, E03C 1/294, E03D 5/10, E03D 5/12, E03D 9/02, E03D 11/02, E03D 11/13, E04H 4/12, F24H 15/37

(54) **OCCUPANCY SURVEILLANCE FOR PLUMBING FIXTURES**

(30) Priority: 25.04.2023 US 202363461742 P; 15.04.2024 US 202418635770
(71) Applicant: Kohler Co., Kohler, WI 53044 (US)
(72) Inventor: KURU, William, Kohler, 53044 (US); KWACZ, Jason M., Kohler, 53044 (US); SMIES, Ariana, Kohler, 53044 (US); JAYAKUMAR, Prasanth, Kohler, 53044 (US); GARG, Yachna, Kohler, 53044 (US); ZHANG, Yunjie, Kohler, 53044 (US); WHITFIELD, Robin, Kohler, 53044 (US)
(74) Representative: Barker Brettell LLP

(57) **Abstract**

A control system for a plumbing fixture includes at least a network device, a plumbing fixture, and a controller. The network device is configured to detect a plurality of connections for mobile devices in an indoor space associated with the plumbing fixture. A controller configured to compare the plurality of connections to an occupancy threshold and generate a command for the plumbing fixture.

## Description

### CROSS-REFERENCE TO RELATED APPLICATION

This application claims the benefit of and priority to U.S. Provisional Patent Application No. 63/461,742, filed April 25, 2023, and U.S. Patent Application No. 18/635,770, filed April 15, 2024, which are incorporated herein by reference.

### FIELD

The present disclosure relates to energy conservation or water conservation based on the occupancy of a building.

### BACKGROUND

A plumbing system of a building connects a water source such as municipal water or a well to plumbing fixtures. The plumbing fixtures may be incorporated on various devices that consume or treat water so that water is ready for immediate usage on demand by the user. A significant amount of energy inevitably is spent when no users or few users are present in the building. If it is possible to predict in advance when plumbing fixtures are going to be used, and estimate their usage rates, improvements could be made in water consumption, energy consumption, and disinfectant consumption. In addition, plumbing fixtures could be made safer and with a more pleasant experience for the user.

### BRIEF DESCRIPTION OF THE DRAWINGS

Exemplary embodiments are described herein with reference to the following drawings, according to an exemplary embodiment.
FIG. 1 illustrates an example building having a plumbing system operated in accordance with occupancy surveillance.
FIG. 2 illustrate a control system including occupancy surveillance and a water circulation device.
FIG. 3 illustrate a control system including occupancy surveillance and a pipe flush valve.
FIG. 4 illustrate a control system including occupancy surveillance and a drain line water trap valve.
FIG. 5 illustrate a control system including occupancy surveillance and a water storage tank valve.
FIG. 6 illustrate a control system including occupancy surveillance and a toilet.
FIG. 7 illustrate a control system including occupancy surveillance and a hot water heater.
FIG. 8 illustrate a control system including occupancy surveillance and a water softener.
FIG. 9 illustrate a control system including occupancy surveillance and a water filter.
FIG. 10 illustrate a control system including occupancy surveillance and a heater.
FIG. 11 illustrate a control system including occupancy surveillance and a consumable alert.
FIG. 12 illustrate a control system including occupancy surveillance and a pool.
FIG. 13 illustrate a control system including occupancy surveillance and a fountain.
FIG. 14 illustrate a control system including occupancy surveillance for a user tracker.
FIG. 15 illustrate a control system including occupancy surveillance for a leak tracker.
FIG. 16 illustrates an example toilet for occupancy surveillance.
FIG. 17 illustrates another example toilet for occupancy surveillance.
FIG. 18 illustrates an example controller for the examples of FIGS. 1-17.
FIG. 19 illustrates a flow chart for the apparatus of FIG. 18.

### DETAILED DESCRIPTION

In some examples, plumbing systems include flow meters to monitor/measure water movement. Data is collected, but there are several drawbacks to this system. First, flow meters have a high cost. Adding flow meters to all usage points in a plumbing system is difficult. In addition, flow meters inherently include a lag. When the flow meters detect low water consumption, that usage has already occurred in the past. Flow meters may be minimally helpful in predicting upcoming water consumption.

The following embodiments utilize wireless communication to predict water consumption or energy usage in a building or set of buildings. A network device configured for wireless communication with mobile devices may log the established connections, attempted connections, available connections or other indicators of the mobile devices. The connection information is indicative of the occupancy of the building. The system in the following embodiments may be applied to any type of home, building, or facility. The techniques for determining occupancy from wireless connections may vary in different types of buildings.

Examples of wireless communication include the family of protocols known as Wi-Fi (e.g., based on the IEEE 802.11 standards) used for local area networking of devices and internet access. Wi-Fi communication enables devices to exchange data by radio signals, allowing nearby digital devices to exchange data by radio signals. A network device such as an access point, a router, or a data switch establishes connections with the devices to form a wireless network. The network device may generate data for a count of the number of connections. Alternatively, the network device may generate data for the number of attempted connections, or the number of devices that have communicated with the network device over a time period. The network device may count the number of devices that have at least begun the authentication and association process (e.g., as specified under IEEE 802.11). The devices scan a set of frequencies for available Wi-Fi networks and generate and send probe frames to the network devices. The network device may response to the probe frames with address information or other capabilities. The network device may count the probe frames, even without a connection being established, as an indicator of the number of wireless devices in vicinity of the network device (e.g., in the building).

Examples of wireless communication include the family of protocols known as Bluetooth. The Bluetooth protocol, or another ad hoc network, may allow for the direct connection probe without user intervention. For example, a Bluetooth transceiver, which is another example of a network device, may transmit or broadcast a packet of information that advertises the existence of the Bluetooth transceiver as available for an ad hoc connection. The existence of the direction connection probe, or put another way, the ability of the radio of the network device to receive the direction connection probe from the mobile device, indicates that the mobile device is in proximity.

Other examples of wireless communication include radio frequency identification (RFID) or near field communication (NFC). These short range communication signals may be received when a mobile device passes near the receiver. The receiver may be located at entry points (e.g., doorways) of the building.

In this disclosure systems that use wireless surveillance are described. These wireless activity surveillance systems may be used to improve the performance of several different types of plumbing fixtures/systems.

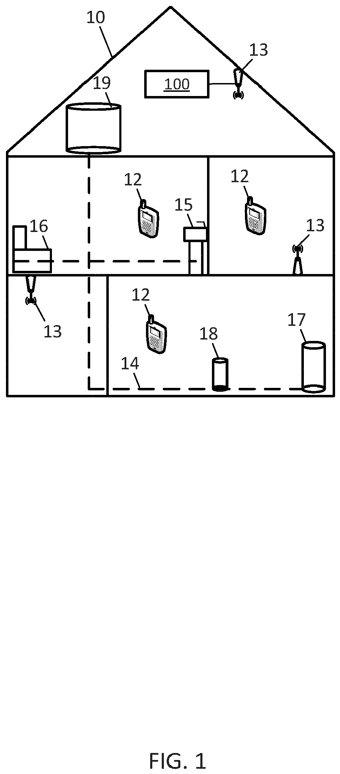

FIG. 1 illustrates an example building 10 having a control system for at least one plumbing fixture. The plumbing fixtures are devices (e.g., appliances, tanks, valves, etc.) connected to a plumbing system 14. At least one plumbing fixture is operated in accordance with occupancy surveillance based on a wireless network. The wireless network may include multiple access points 13 and devices 12 (e.g., mobile device) configured to communicate with the access points 13. In addition, at least one of the access points 13 is in communication with at least one network device 100 configured to determine the occupancy of the building 10 based on network activity.

The network device 100 may monitor connections, attempted connections, or potential connections with the devices 12 in order to estimate occupancy. The network device 100 may determine the active connections based on the number of devices 12 connected and exchanged data with the network device 100. The network device 100 may determine the attempted connections based on the number of devices 12 that have exchanged a request probe with the network device 100.

In some examples, the network device 100 may also monitor data transfer rates. The data transfer rates are indicative of the number of users connected to the wireless network and the duration of time that the users spend in the building 10. The data transfer rate may be cumulative over time. The data transfer rate may be an average rate or instantaneous rate across multiple users. The data transfer rates measured in bytes (gigabytes) or bytes per unit time.

The network device 100 may compare a current count of connections or a cumulative data transfer rate to an occupancy threshold to estimate whether the occupancy is at one of a plurality of levels. Separate thresholds may be used for quantity of connections and transfer rates. The network device 100 mare compare a current count of connections or cumulative data transfer rate to a rolling average to determine whether the building 10 is becoming more occupied or less occupied. The transfer rate, cumulative transfer quantity, connections, attempted connections, or potential connections are examples of usage data.

A controller 101, which may be incorporated with the network device 100, is configured to compare the connections to an occupancy threshold and generate a command for the plumbing fixture, as described in the following embodiments. Some commands may open a water passage. Some commands may supply water and/or specify a quantity of water. Some commands may fill or empty a tank. Some commands may set the water level of the tank. Some commands may set a pressure level in the plumbing fixture.

The plumbing system 14 is connected to various appliances. Example appliances are illustrated including a lavatory 15, a toilet 16, a water heater 17, a water softener 18, and a grey water tank 19. Additional, different, or fewer components may be included.

In another example, one or more of the appliances may include a usage sensor S such as a flow sensor configured to measure the amount of water consumed by the appliance. Proximity sensors or other sensors may be used to detect the presence of the users. The controller 101 may estimate current water usage or future water usage based on the amount of water consumed in combination with the estimated occupancy based on the data transfer rates or connected devices.

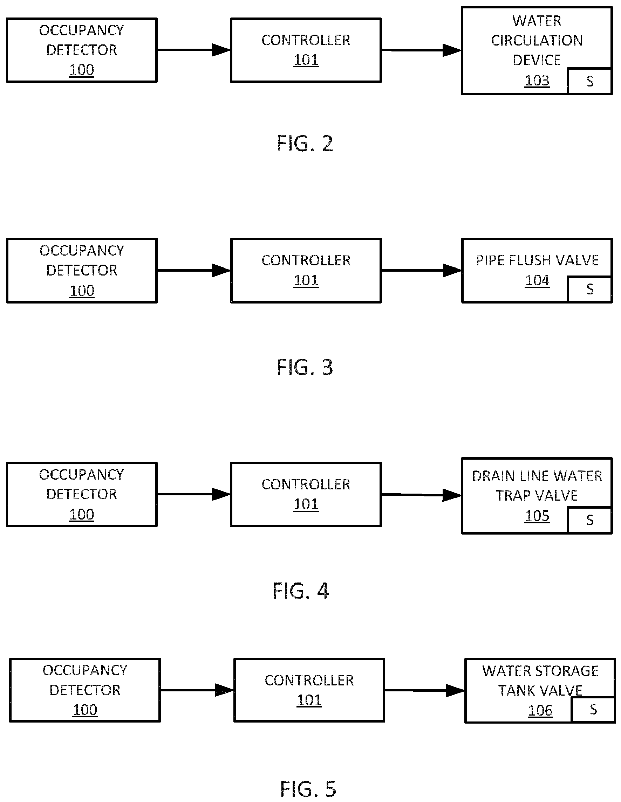

FIG. 2 illustrate a control system including occupancy surveillance by the controller 101 and a water circulation device 103. Large volumes of water are wasted while running showers and faucets waiting for hot water to arrive. Hot water recirculation systems including the water circulation device 103 are designed to prevent this. The water circulation device 103 require some sort of user input. For example, hot water circulation systems are either always on, programmed to a set timer, or initiated when a user pushes a button on a timer.

To improve this operation, the controller 101 may generate a command for the water circulation device 103 when the building occupancy indicates that a threshold number of users are present in the building 10. The controller 101 may identify user patterns (or correlate activity with historical user patterns) to determine when the water circulation device 103 should be turned on. In one example, the water circulation device 103 is a recirculation pump that is switched on in response to the command from the controller 101.

As a result, energy is saved when the residents or occupants are away, water is saved that would otherwise be wasted waiting for the hot water to arrive, and the user would have a more pleasant experience overall.

An example for the building occupancy threshold may be a portion of capacity of the building (e.g., 50% capacity or 20% capacity). An example for the building occupancy threshold may be any users (e.g., a single person detected may trigger the water circulation device 103). These are predetermined occupancy thresholds.

Any of the examples described herein may be described with respect to activating and deactivating the plumbing fixture or commanding the plumbing fixture to a particular function, which may refer to any of the following examples. The occupancy threshold may also be dynamic. The controller 101 may calculate the occupancy threshold based on one or more environmental factors. Example environmental factors from the sensor S include the ambient temperature, humidity, time of day, or others.

The controller 101 may calculate the occupancy threshold based on one or more environmental factors from an external source. Examples of external sources may include weather data. When the weather data indicates for example a cold temperature, below a temperature threshold, the controller 101 does not use the occupancy threshold to activate or deactivate the plumbing fixture (e.g., water circulation device 103). When the temperature is above the temperature threshold, the controller 101 uses the occupancy threshold to change the operation of the plumbing fixture (e.g., water circulation device 103).

In another example, the external source may be cost data. For example, the cost data may relate to the cost of water, or the cost of electricity used to heat the water. The controller 101 may compare the cost to a predetermined cost. When costs are high, the controller 101 may control the plumbing fixture (e.g., water circulation device 103) in response to the occupancy threshold. When costs are low, the controller 101 may deactivate control and not perform the process or generate commands for the plumbing fixture.

In one example, the controller 101 may activate or deactivate control of plumbing fixture based on a user input. In one example, the controller 101 may set or otherwise identify the occupancy threshold based on a user input. The user input may be received by a wireless communication or button press.

FIG. 3 illustrate a control system including occupancy surveillance by the controller 101 and a pipe flush valve 104 as another example plumbing fixture. One concern regarding standing water in pipes relates to microbiological health hazards in plumbing systems. An example is legionella in freshwater pipes. Legionella is bacteria that includes the species that causes legionellosis or a pneumonia-type illness called Legionnaires' disease. Legionella grows in stagnant water when temperatures are between roughly in the range of 80-140-degrees F. In some situations, unoccupied buildings or in plumbing branches of buildings with low occupancy, conditions may be favorable for the growth of legionella. Examples include schools, motels, and commercial buildings. The conditions may occur in decorative fixtures as well as potable lines.

The pipe flush valve 104 or a pump may be coupled to certain plumbing branches or plumbing system 14 in order to provide water to flush out the system. In some examples, the pipe flush valve 104 opens a drain to the plumbing system 14 and new water is provided into the plumbing system 14.

The controller 101 may monitor the occupancy in the building 10 and open the pipe flush valve 104 to flush the plumbing system 14 when the occupancy has been below a threshold level for a predetermined amount of time. Example predetermined lengths of time to trigger pipe flushing may be days, weeks, or months (e.g., 1 week). The controller 101 generates a command to open the pipe flush valve 104 to the drain and/or a source valve to release new water into the plumbing system 14.

In addition, or as an alternative, the pipe flush valve 104 may be configured to release a dose of disinfectant (e.g., chlorine) in addition to fresh water. This prevents the growth and spread of a dangerous disease by purging the infected water.

FIG. 4 illustrate a control system including occupancy surveillance by a controller 101 to operate a drain line water trap valve 105 as another example plumbing fixture. Many types of appliances include traps (e.g., P-trap, S-trap, trapway) that provide a water seal between the sewer drain and the open atmosphere of the room. Example appliances include, lavatories, sinks, toilets, bathtubs, and others. The water level in the trap prevents air from backflow out of the drain. Diseases or viruses may transmit themselves or travel through drainage networks by way of waste and aerosol movements. SARS is known to have been transmitted in this manner and Covid-19 is suspected to be transmitted the same way. It is very important that all drainage system traps are all sealed with water to prevent the spread. This is often a challenge because large buildings could have hundreds of traps in their drainage networks.

Through evaporation, leakage, or user intervention, the water seal in the trap may be interrupted, which may be referred to as an open trap or a dry trap. During low use periods, or when occupants are away, there is no clear way to know which traps are dry. An open trap could quickly allow particles or aerosols including infection into a room.

The drain line water trap valve 105 may be configured to release additional water into the trap. In some examples, the drain line water trap valve 105 opens an auxiliary opening at the trap that is connected to a water source. In other examples, the drain line water trap valve 105 simple releases water in the device to the trap (e.g., turns on a faucet, provides water from a rim opening or tank of a toilet).

The controller 101 may monitor the occupancy in the building 10 and open the drain line water trap valve 105 when the occupancy has been below a threshold level for a predetermined amount of time. Example predetermined lengths of time to trigger trap refills may be days, weeks, or months (e.g., 2 weeks). The controller 101 generates a command to open the drain line water trap valve 105 to refill the trap a re-establish the water seal.

The occupancy surveillance system could detect when regions of a building have been unoccupied for periods of time and require trap checks and/or refills. Refills could also be done by electronic valves connected to the system. An alternative may be to coordinate the opening of the pipe flush valve 104 with the drain line water trap valve 105 in a single system. A p-trap system could include the pipe flush valve 104 for the purge water located at the trap between the plumbing fixture and water seal.

FIG. 5 illustrate a control system including occupancy surveillance by controller 101 and a water storage tank valve 106 as another example plumbing fixture. The water storage tank valve 106 may be connected to a rainwater collection system (e.g., on the roof of the building 10) or a greywater tank. The greywater tank may collect water from certain applications and store it for other applications. The greywater may be treated. This treated water may be used in toilet flushing or irrigation. However, treated greywater and rainwater cannot be stored indefinitely. Treated greywater may go septic and potentially could contaminate plumbing lines. Occasionally, the stored water is disposed. The cycle of time for disposal should be shorter when a building is nearly vacant and the water in the tanks is not being used.

The controller 101 may monitor the occupancy in the building 10 and generate a command to open the water storage tank valve 106 when the occupancy has been below a threshold level for a predetermined amount of time. Example predetermined lengths of time to tank emptying may be days, weeks, or months (e.g., 1 month). The controller 101 generates a command to open the water storage tank valve 106 to the drain to empty or partially empty the tank.

Alternatively, the controller 101 may generate a command to close off the input to the tank. The rainwater tank may be covered using a drive system. The greywater supply line may be closed by a valve. The controller 101 may cease water collection while the occupants are away and restart collection when the detected building occupancy returns to a predetermined level. These techniques provide the prevention of contaminating the treated non-potable water lines, reduction of chemical use, increasing the life of the filters, and reduction in electricity to treat the water.

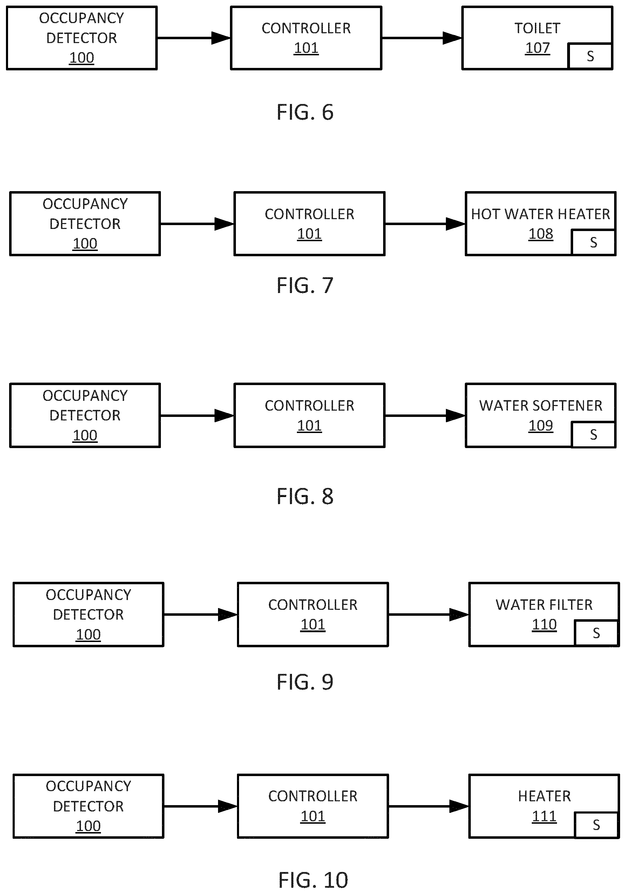

FIG. 6 illustrate a control system including occupancy surveillance by a controller 101 for operation of a toilet 107 as another example plumbing fixture. The toilet 107 may include a variety of sanitization devices. The toilet 107 may include integrated chemical dispensing systems or assemblies, which are configured to introduce (e.g., deliver, dispense, etc.) a chemistry (e.g., a cleaning compound) into a bowl of the toilet during a cleaning cycle. As discussed below, the cleaning compound includes a chemical compound, which can be mixed with water to dilute the concentration of chemical compound. The water can be supplied by a fill valve of the toilet; and the cleaning compound can be introduced into the bowl through a flush valve of the toilet. The cleaning compound configured to influence (e.g., reduce) scale, slippery, and/or sanitation through the cleaning compound to thereby have improved cleanliness. As used herein, the term "scale" generally refers to mineral deposits (e.g., calcium carbonate, magnesium carbonate, etc.), that collect or build-up on the surfaces of the components of systems, such as toilets. As used herein, the term "slippery" generally refers to coating(s) that may be applied to the surfaces of the components of the systems to influence the coefficient of friction of the surfaces. For example, a non-stick coating, such as a diamond-fusion coating, may be applied to surfaces of the components to reduce the coefficient of friction of the surfaces to which the coating is applied. As used herein, the term "sanitation" generally refers to the application (e.g., introduction, etc.) of antimicrobial chemicals. Thus, the toilets disclosed herein can introduce a cleaning compound to thereby reduce, scale, slippery, and/or sanitation. Example compounds included chlorine.

When a toilet is unused for a period the chlorine in the bowl water may react with contaminants in the bowl and dissipate. Once the chlorine levels are gone, bacteria and mold may start to grow leaving the bowl unsightly.

The controller 101 may monitor the occupancy in the building 10 and generate a command to dispense cleaning compound into the tank or the bowl of the toilet 107 when the occupancy has been below a threshold level for a predetermined amount of time. Example predetermined lengths of time to tank emptying may be days, weeks, or months (e.g., 2 days). The compound may be dosed from a dispenser, from a toilet seat, or into the tank.

In one example, the command from the controller 101 actuates a flush valve of the toilet 107 to perform an automated flush when the occupancy has been below the occupancy threshold for the predetermined amount of time.

FIG. 7 illustrate a control system including occupancy surveillance by a controller to issue a command to a hot water heater 108 as another example plumbing fixture. The hot water heater 108 continuously or semi-continuously uses energy via one or more heating elements to maintain the temperature of the water in the tank.

The controller 101 may monitor the occupancy in the building 10 and turn off the heating element when the occupancy of the building falls below a threshold level according to the number of devices connected to the wireless network or the amount of data passing through the wireless network. The occupancy threshold may be zero. Likewise, when the occupancy returns to above the threshold level, the controller 101 may turn on the heating element so that hot water can be provided by the hot water heater 108.

FIG. 8 illustrate a control system including occupancy surveillance by a controller 101 to issue a command to and a water softener 109 as another example plumbing fixture. FIG. 9 illustrate a control system including occupancy surveillance by the controller 101 to issue a command to a water filter appliance 110 as another example plumbing fixture. Water softeners and water filters used in residential and commercial water systems may follow a set schedule to recharge (backwash) themselves on a set schedule. Recharging requires water, chemistry, and power, and can shorten the life of filters. If the building is unoccupied for a period, recharging and maintaining high water temperatures may not be necessary.

The controller 101 detects the occupancy of the building 10 based on wireless connectivity or throughput adjusts the requirements for recharging. High occupancy detection in the building would create greater quantities of hot water. Projections could be created for the amount of filtered water or hot water required in a time period. The controller 101 may issue commands to recharge the water in the water softener 109 or the filter 110 in response to the occupancy. Recharging may be paused when the occupancy falls below a threshold level. Recharging may be re-activating when the occupancy surpasses the threshold level. Various schedules may be implemented by the controller 101 based on the occupancy level.

FIG. 10 illustrate a control system including occupancy surveillance including a controller 101 to issue commands for a heater 111 coupled to the plumbing fixture. The heater 111 may be a floor heating, bath heater, whirlpool heater, shower heater, toilet seat heater, bidet heater or another type of heater. The heater 111 may normally follow a duty cycle to keep a surface that comes in contact with users warm (e.g., a few degrees above ambient temperature). However, this heating is unnecessary when the building is not occupied or sparsely occupied.

The controller 101 may monitor the occupancy in the building 10 and turn off the heater 111 when the occupancy of the building falls below a threshold level according to the number of devices connected to the wireless network or the amount of data passing through the wireless network. The controller 101 may turn on the heater when the occupancy returns to a level above the threshold level. The controller 101 may assign a duty cycle to the heater 111 based on the occupancy of the building.

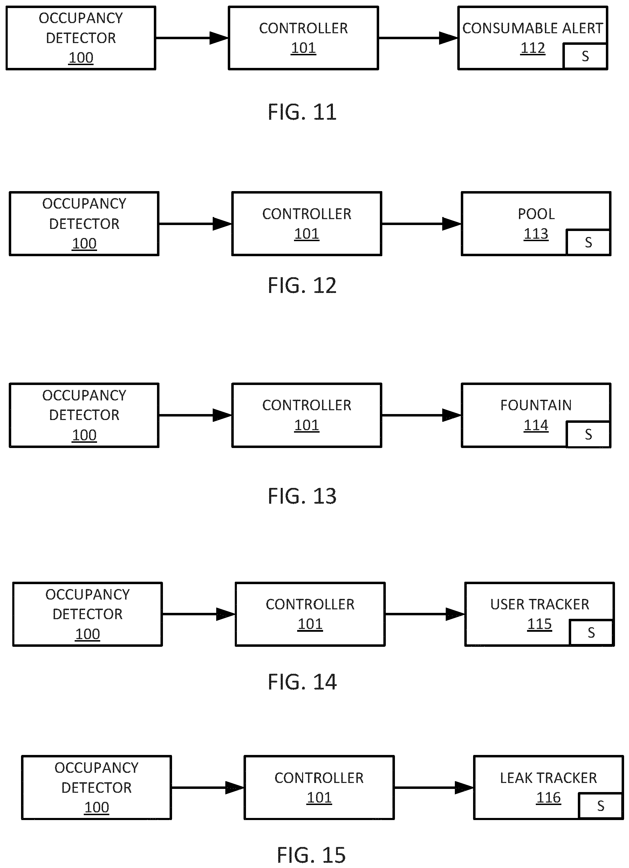

FIG. 11 illustrate a control system including occupancy surveillance by a controller 101 to generate a consumable alert. Commercial bathrooms contain many devices that require maintenance. There are common maintenance tasks such as cleaning and restocking paper and soaps, but there are also some new plumbing innovations coming (hand driers, toilet filters, air filters, and disinfection systems) that require filter change-outs and refills.

The controller 101 may generate a schedule for the replacement of consumables based on the occupancy determined from the wireless network activity. Detection of the number of building occupants over a time period can determine whether cleaning is necessary, stocks need to be replenished, or whether filters and chemical tanks need to be changed or refilled.

The output would be a commercial bathroom with a well-maintained and continuous stock of materials, and properly functioning devices. The maintenance staff would no longer need to guess. There would be a record of traffic patterns for predicting future purchases. There would also be capacity records of usage for future bathroom size remodeling projects.

FIG. 12 illustrate a control system including occupancy surveillance and a controller 101 to issue commands for maintaining chemistry in a pool 113. FIG. 13 illustrate a control system including occupancy surveillance and a controller 101 to issue commands for maintaining chemistry in fountain.

Pools and decorative fountains exist in many commercial buildings (often indoors). These systems require proper maintenance to keep them safe. Knowledge of how often the pools are used or the number of occupants in the pool area can lead to a better management of chemistry in the pool, pool filters, or pool supplies. Maintaining the proper chemistry in fountains and ponds where occupancy is high can lead to safer spaces.

The controller 101 may monitor the occupancy in the building 10 (or surroundings of the building 10) and generate a command to dispense cleaning compound into the pool 113 or fountain 114 based on the occupancy. A chemical tank may be connected to the pool 113 or fountain 114 with a valve that is actuated by the controller 101. When the occupancy has been below a threshold level for a predetermined amount of time (e.g., 1 month), the controller may pause the distribution of chemicals into the pool 113 or fountain 114. When activity returns to the area, the controller 101 may re-activate the distribution of chemicals.

Safer spaces for people who want to use swimming pools or sit near ponds and decorative fountains. Occupancy data for swimming pools for building management for prediction of supplies and maintenance.

FIG. 14 illustrate a control system including occupancy surveillance for a user tracker 115. Some people do not know how much water they use daily. Changes can only happen if you can make measurements. Using the wireless network, the controller 101 may track individual users throughout the building 10. For example, the wireless network may be a mesh network including multiple access points 13. The controller 101 may track mobile devices 12, each having a unique identifier, as the mobile devices 12 move throughout the building 10.

The user may be informed of the user's movement so that the environmentally conscientious user can keep track of his or her water usage so that they can make changes to their habits. Homeowners may be able to see a dashboard of users in their homes to keep track of habits. Water limits could be created. Safety protocols could be created for certain users (i.e., control water temperatures for young users). Features may be developed to determine whether an individual is in distress. In one example, users identified as contagious are tracked in a facility. Deep cleaning or quarantine restrictions may be implemented in response to the tracking.

FIG. 15 illustrate a control system including occupancy surveillance including a controller 101 for a leak tracker 116. The controller 101 may determine the occupancy of the building 10 over time based on the number of wireless connections or data transferred through the wireless network. The controller 101 may lookup or otherwise calculate an estimated amount of water that should be consumed for a time period based on the occupancy of the building 10. When there is a discrepancy between actual water usage and estimated water usage by occupancy data, the controller 101 generates an alert, which is sent to the leak tracker 116. The leak tracker 116 may include an annunciator (e.g., light, announcement, etc.) that alerts an administrator of the potential leak. The leak tracker 116 may send a message to an administrator indicative of the potential leak.

Other example interventions by the controller 101 in response to building occupancy determined from the wireless network may include fragrance distribution, lights, air fresheners, heating ventilation and air conditioning (HVAC), or other systems. A device for fragrance distribution or air freshening (e.g., filtering) may be turned off based on low occupancy. Lights, or a portion thereof, may be turned off based on low occupancy. Leaks may be detected in the HVAC system based on occupancy.

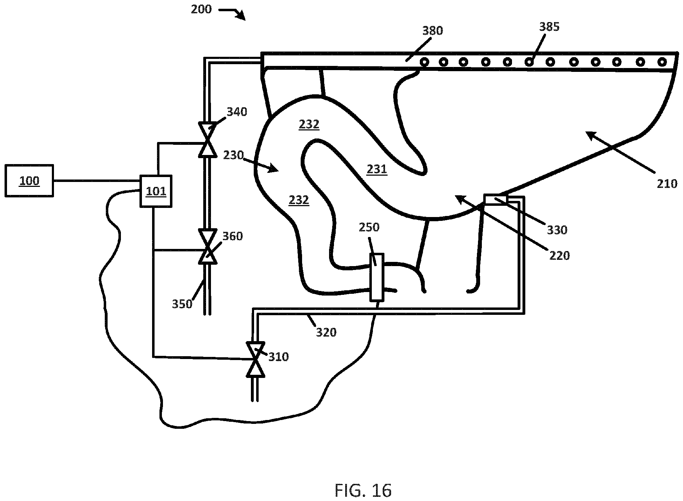

FIG. 16 illustrates a toilet 200 as an example plumbing fixture. The toilet 200 may include includes a bowl 210, sump 220, and trapway 230. The bowl 210 may be in communication with and/or include the sump 220 disposed at a bottom of the bowl 210. The sump 220 or receptacle may hold water and/or waste during an operational cycle of the toilet 200. The sump 220 may be in communication the trapway 230. The trapway 230 may include a first portion 231, second portion 232, and a weir 233 separating the first and second portions 231,232. The first portion 231 may extend from the sump 220 at an upwardly oblique angle to the weir 233. The second portion 232 of the weir 233 downwardly to an exiting device such as drain pipe or soil pipe.

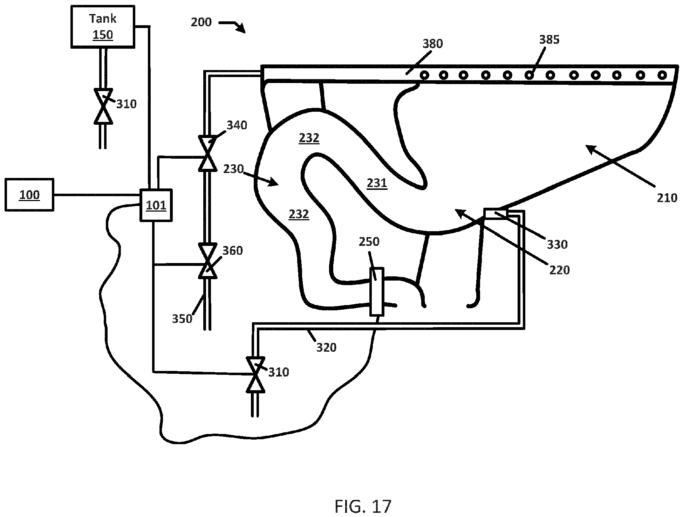

The toilet 200 may be an in-line toilet including a pedestal or base and a seat assembly. FIG. 17 illustrates an example including a tank 150. The tank 150 may rest upon the base of the toilet 200.

The toilet 200 may include an actuator that is configured to initiate an operational cycle when activated. The actuator may be a button configured to activate when depressed (or pulled) a predetermined distance or when touched, or any suitable device configured to activate based upon an input manipulation by a user. In some examples, an operational cycle may be initiated using one or more control signals sent wirelessly (e.g., via the internet) from a computer (e.g., cell phone) to the toilet 200.

It should be noted that various components of the toilet may be made of a vitreous material such as clay. It should be noted that various components of the toilet may be polymeric and/or over molded or otherwise fixed to the toilet. The toilet disclosed herein may have a wide variety of skirted toilet configurations, and all such configurations are intended to be encompassed herein. The following description of various toilet features is therefore intended as illustration only of one possible embodiment, and it should be understood by those reviewing the present description that similar concepts or features may be included in various other embodiments.

The toilet 200 may include a controller 101 or otherwise be in communication and/or coupled to the controller 101 according to any of the embodiments herein. The controller 101 may be in communication with a network device configured to detect a plurality of connections for mobile devices. The controller 101 is configured to compare the plurality of connections to an occupancy threshold and generate a command for one or more devices of the toilet 200 including the following valves, pumps, or jets.

The toilet 200 includes a gate valve 250 disposed in or coupled to the trapway 230 of the toilet 200. The gate valve 250 may disposed in the second portion 232 of the trapway 230. The gate valve 250 may be coupled to the trapway 230 such that the channel of the gate valve 250 is in communication with the trapway 230.

The controller 101 may open and close the gate valve 250 according to the occupancy data or comparison of the occupancy data with the occupancy threshold. The gate valve 250 may close to hold water in the trapway 230 to block sewer gas from flowing through the toilet 200 in a reverse direction. In this way, if a water seal in the first portion 231 evaporates over time, the water near gate valve 250 provides a seal.

The toilet 200 may further include a sump jet valve 310, a sump jet line 320, a sump jet outlet 330, a rim valve 340, a rim line 350, a first diverter valve 360, a rim channel 380, and rim channel outlets 385 or rim jets.

The sump jet valve 310 may be configured to control a flow of fluid (e.g., water) from a water supply (e.g., a building water supply) to a sump jet line 320. The sump jet line 320 may be a conduit (e.g., pipe, tube, house) configured to conduct or convey a flow of water from the sump jet valve 310 to a sump jet outlet 330. The sump jet outlet 330 may be disposed in the sump 220 of the toilet 200 and may be configured to provide water to the sump 220 during a flush or operational cycle of the toilet 200. Water from the sump jet may aid to flush the toilet 200 and break the siphon in the trapway 230. After periods of low occupancy, the controller 101 may actuate the sump jet valve 310 to cause the sump jet to reset or otherwise provide water for the water seal in the trapway 230.

The rim valve 340 and/or diverter valve 360 may be configured to control a flow of fluid (e.g., water) from a water supply (e.g., building water supply) through a rim line 350. The rim line 350 may be a conduit (e.g., pipe, tube, hose) configured to conduct or convey a flow of water from the rim valve 340 to a rim channel 380 of the toilet 200. The rim channel 380 may be disposed in or below a rim of the toilet 200 and may be in communication with one or more rim outlets 385 disposed between the rim channel 380 and the bowl 210. During a flush or operational cycle of the toilet 200, fluid (e.g., water) may flow through the rim valve 340 into the rim line 350, through the rim line 350 into the rim channel 380, through the rim channel 380 into the rim outlets 385, and through the rim outlets 385 into the bowl 210. Water provided to the bowl 210 may be used to rinse the walls of the bowl 210 and/or fill the bowl 210 and trapway 230 with water. In some examples, each of the sump jet valve 310 and the rim valve 340 may be solenoid valves configured to actuate (e.g., open, close) in response to receipt of one or more control signals and/or electric current. In some examples, the sump jet valve 310 and the rim valve 340 may actuate concurrently during a flush or operational cycle. In other examples, the sump jet valve 310 and the rim valve 340 may actuate at different times during an operational cycle of the toilet 200.

After periods of low occupancy, the controller 101 may actuate the rim valve 340 and/or diverter valve 360 to provide water from the rim outlets 385 to rinse the bowl 210. In other examples, the controller 101 may actuate the rim valve 340 and/or diverter valve 360 reset or otherwise provide water for the water seal in the trapway 230.

In one alternative, the controller 101 may disable the sump jet valve 310, the rim valve 340 and/or the diverter valve 360 when occupancy is below the threshold value. Likewise, the controller 101 may enable the sump jet valve 310, the rim valve 340 and/or the diverter valve 360 when occupancy is above the threshold value.

FIG. 17 includes the tank 150 with a tank valve 310 connected to the water supply and also under command of the controller 101. The controller 101 may deactivate or close the tank valve 310 when the occupancy data indicates that occupancy is low (below the threshold). Likewise, the controller 101 may activate or open the tank valve 310 when the occupancy data indicates that occupancy is high (above the threshold).

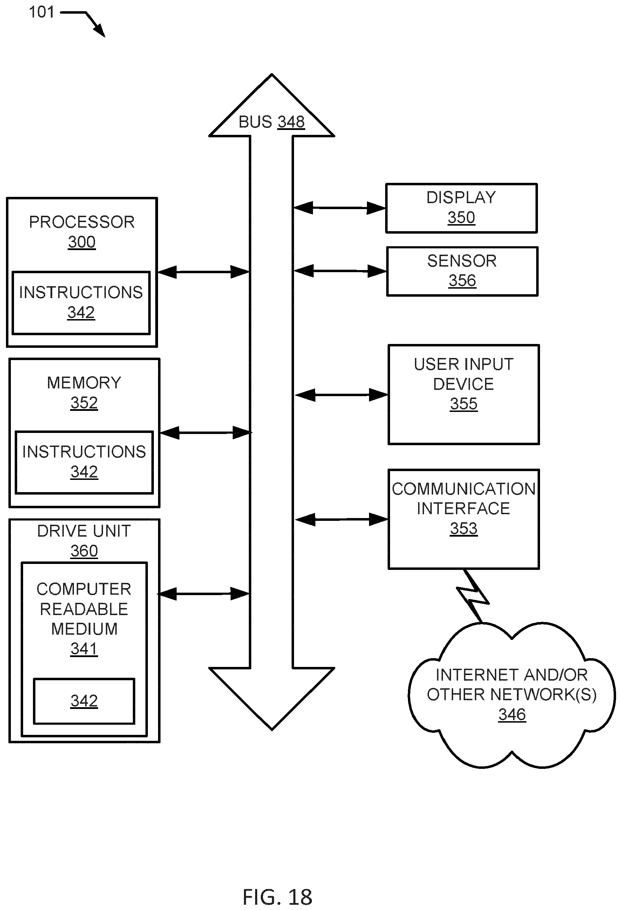

FIG. 18 illustrates an example controller 101 for occupancy estimate and control of any of the plumbing fixtures or other devices described herein. The controller 101 may include a processor 300, a memory 352, and a communication interface 353 for interfacing with devices or to the internet and/or other networks 346. In addition to the communication interface 353, a sensor interface may be configured to receive data from sensors (e.g., proximity sensors).

The components of the control system may communicate using bus 348. The control system may be connected to a workstation or another external device (e.g., control panel) and/or a database for receiving user inputs, system characteristics, and any of the values described herein.

Optionally, the control system may include an input device 355 and/or a sensing circuit 356 in communication with any of the sensors. The sensing circuit receives sensor measurements from sensors as described above. The input device may include any of the user inputs such as buttons, touchscreen, a keyboard, a microphone for voice inputs, a camera for gesture inputs, and/or another mechanism.

Optionally, the control system may include a drive unit 360 for receiving and reading non-transitory computer media 341 having instructions 342. Additional, different, or fewer components may be included. The processor 300 is configured to perform instructions 342 stored in memory 352 for executing the algorithms described herein. A display 351 may be an indicator or other screen output device. The display 351 may be combined with the user input device 355.

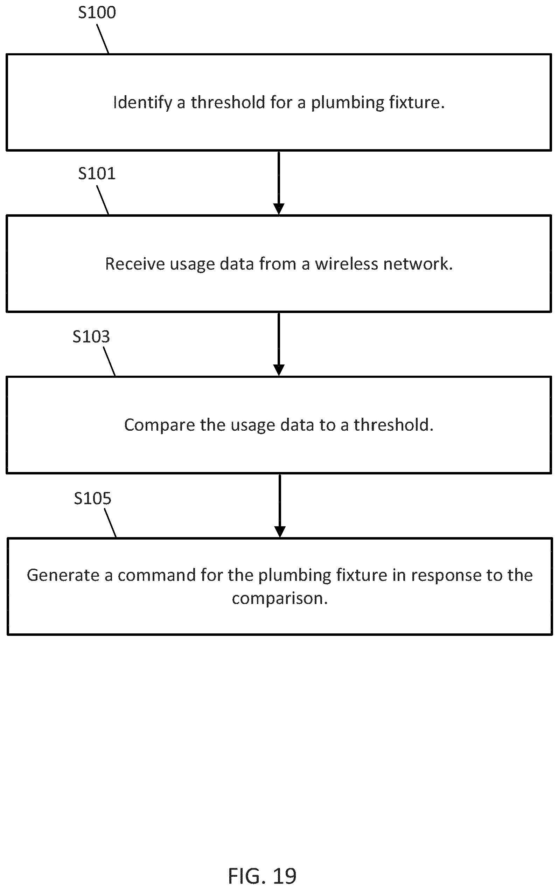

FIG. 19 illustrates a flow chart for the apparatus of FIG. 18 to control a plumbing fixture in response to activity on a wireless network. The acts of the flow chart may be performed by the controller 101. Additional, different of fewer acts may be included.

At act S100, the controller 101 (e.g., processor 300) identifies a threshold for a plumbing fixture. The threshold may be accessed from a data table. For example, the data table may associate different appliances, models, or part numbers with the associated threshold. In addition or in the alternative, the table may associate installation locations (e.g., addresses, customer numbers, coordinates) with associated thresholds.

The thresholds may be set by the user. For example, the user input device 355 may receive inputs that set the threshold. For example, the display 351 may prompt the user to enter an occupancy threshold or percentage of occupancy to enter a water saving mode or low occupancy mode for the plumbing fixture. The user may select to disable half of the appliances or plumbing fixtures in a building when the occupancy value falls below 50%.

The threshold may be calculated based on historical data. That is, the controller 101 may automatically set the threshold to be a certain percentage or statistical measure (e.g., one or more standard deviations from the mean) from occupancy data collected during prior time periods. This technique may be effective in conserving water over the long term (e.g., when seasonal changes are common) or in the short term (e.g., when day to day fluctuations for weekends or holidays are detected).

At act S101, the controller 101 (e.g., processor 300) receives usage data from a wireless network. The usage data may indicate the number of people that are connected to the wireless network. The usage data may be proportional or otherwise indicative of the amount of traffic on the network. Other sensors may generate usage data such as occupancy sensors, proximity sensors, or usage sensors. The usage sensors may include a weight sensor (e.g., toilet seat sensor) indicative of the number of uses or a flow sensor (e.g., in any pipe, faucet, or other water dispenser) that indicates the amount of water being used.

At act S103, the controller 301 (e.g., processor 300) compares the usage data to a threshold. The controller 301 may determine whether the building or system is at high occupancy when the usage data exceeds the threshold or a low occupancy when the usage data is below the threshold.

At act S105, the controller 301 (e.g., processor 300) generates a command for a plumbing fixture in response to the comparison. The command may be any of the examples provided herein including valve commands, power commands (e.g., turning a device or component ON or OFF), or others.

Processor 300 may be a general purpose or specific purpose processor, an application specific integrated circuit (ASIC), one or more programmable logic controllers (PLCs), one or more field programmable gate arrays (FPGAs), a group of processing components, or other suitable processing components. Processor 300 is configured to execute computer code or instructions stored in memory 352 or received from other computer readable media (e.g., embedded flash memory, local hard disk storage, local ROM, network storage, a remote server, etc.). The processor 300 may be a single device or combinations of devices, such as associated with a network, distributed processing, or cloud computing.

Memory 352 may include one or more devices (e.g., memory units, memory devices, storage devices, etc.) for storing data and/or computer code for completing and/or facilitating the various processes described in the present disclosure. Memory 352 may include random access memory (RAM), read-only memory (ROM), hard drive storage, temporary storage, non-volatile memory, flash memory, optical memory, or any other suitable memory for storing software objects and/or computer instructions. Memory 352 may include database components, object code components, script components, or any other type of information structure for supporting the various activities and information structures described in the present disclosure. Memory 352 may be communicably connected to processor 300 via a processing circuit and may include computer code for executing (e.g., by processor 300) one or more processes described herein. For example, memory 298 may include graphics, web pages, HTML files, XML files, script code, shower configuration files, or other resources for use in generating graphical user interfaces for display and/or for use in interpreting user interface inputs to make command, control, or communication decisions.

In addition to ingress ports and egress ports, the communication interface 353 may include any operable connection. An operable connection may be one in which signals, physical communications, and/or logical communications may be sent and/or received. An operable connection may include a physical interface, an electrical interface, and/or a data interface. The communication interface 353 may be connected to a network. The network may include wired networks (e.g., Ethernet), wireless networks, or combinations thereof. The wireless network may be a cellular telephone network, an 802.11, 802.16, 802.20, or WiMax network, a Bluetooth pairing of devices, or a Bluetooth mesh network. Further, the network may be a public network, such as the Internet, a private network, such as an intranet, or combinations thereof, and may utilize a variety of networking protocols now available or later developed including, but not limited to TCP/IP based networking protocols.

While the computer-readable medium (e.g., memory 352) is shown to be a single medium, the term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the methods or operations disclosed herein.

In a particular non-limiting, exemplary embodiment, the computer-readable medium can include a solid-state memory such as a memory card or other package that houses one or more non-volatile read-only memories. Further, the computer-readable medium can be a random access memory or other volatile re-writable memory. Additionally, the computer-readable medium can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored. The computer-readable medium may be non-transitory, which includes all tangible computer-readable media.

In an alternative embodiment, dedicated hardware implementations, such as application specific integrated circuits, programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

## Claims

1. A control system for a plumbing fixture, the control system comprising:
a network device configured to detect a plurality of connections for mobile devices in an indoor space;
a plumbing fixture associated with the indoor space; and
a controller configured to compare the plurality of connections to an occupancy threshold and generate a command for the plumbing fixture.

2. The control system of claim 1, wherein the plumbing fixture is coupled with a water circulation device.

3. The control system of claim 2, wherein the water circulation device includes a recirculation pump and/or wherein the water circulation device includes a refill pump for a trap and/or wherein the water circulation device includes a purge valve.

4. The control system of claim 1, claim 2 or claim 3, wherein the plumbing fixture is coupled to a storage tank.

5. The control system of claim 4, wherein the plumbing fixture is a valve to drain the storage tank.

6. The control system of any one of the preceding claims, wherein the plumbing fixture is coupled to a water softener, a water heater, or a water filter, and the command for the plumbing fixtures.

7. The control system of any one of the preceding claims, wherein the plumbing fixture is coupled to a heater and/or wherein the plumbing fixture is coupled to a fountain or pond and/or wherein the plumbing fixture is coupled with a disinfectant dispenser.

8. The control system of any one of the preceding claims, wherein the plumbing fixture is a toilet with a chemical dispenser.

9. The control system of claim 8, wherein the controller initiates the chemical dispenser in a tank of the toilet and initiates a flush to provide water from the tank to a bowl of the toilet.

10. The control system of claim 8 or claim 9, wherein the chemical dispenser is configured to dispense into a bowl of the toilet.

11. A water appliance comprising:
a valve configured to direct water toward or away from a water appliance;
a network device configured to detect a plurality of connections for mobile devices; and
a controller configured to compare the plurality of connections to an occupancy threshold and generate a command for the valve.

12. The water appliance of claim 11, wherein the command for the valve provides water to a tank and/or wherein the command for the valve provides water to a toilet bowl.

13. A method to control a plumbing fixture in response to activity on a wireless network, the method comprising:
receiving usage data from a wireless network;
comparing the usage data to a threshold; and
generating a command for a plumbing fixture in response to the comparison.

14. The method of claim 13, further comprising:
receiving a user input for the threshold.

15. The method of claim 13 or claim 14, further comprising:
calculating the threshold based on historical data.
